# EUROPEAN PATENT APPLICATION

(11) **EP 3 477 909 A1**
(43) Date of publication of application: **01.05.2019**
(21) Application number: 18202648.4
(22) Date of filing: 25.10.2018
(51) Int. Cl.: H04L 29/06, H04M 3/42

(54) **METHOD FOR ESTABLISHING A TELEPHONE CONVERSATION BETWEEN TWO USERS SIMULTANEOUSLY CALLING ONE ANOTHER**

(30) Priority: 25.10.2017 IT 201700121107
(71) Applicant: Welcome Italia S.p.A., 55054 Massarosa (IT)
(72) Inventor: LUISOTTI, Stefano, 55054 Massarosa (IT); OPPEDISANO, Francesco, 56123 Pisa (IT)
(74) Representative: Savi, Massimiliano

(57) **Abstract**

A method and an apparatus for handling telephone calls between two users simultaneously calling one another, so that the telephone conversation between the two users is directly established, instead of keeping the user on hold by sending them the "busy user" signal or interrupting one of the two simultaneous calls to then complete the other one.

## Description

### FIELD OF THE INVENTION

The present invention relates the field of telecommunications and, in particular, to a method for handling telephone calls between two users simultaneously calling one another.

### BACKGROUND OF THE INVENTION

Telephone communication systems are increasingly developed and widespread and count a growing number of users. In particular, mobile phones and means of mobile communication have now reached an enormous spread. Figures for 2014 estimate mobile users to be in the number of about one hundred and twenty per hundred inhabitants in developed countries and of about ninety per hundred inhabitants in developing countries.

Therefore, the number of communications between mobile devices is enormous and, consequently, it is increasingly probable that two users try to contact each other simultaneously or in any case in the same time interval, resulting in being busy in another conversation and therefore unavailable.

Therefore, the situation in which two users A and B, part of a fixed or mobile telephone network, try to establish a telephone connection for the first time or try to establish a new telephone connection following the interruption, for any reason, of the previous one, is increasingly common. In this case, users A and B attempt to call each other back, but they both receive the busy signal caused by the simultaneity of the respective call attempts. At this point, the two aforesaid users may abandon the call attempt or may repeat the attempt to make the call until one of them succeeds in anticipating the other one by a time margin sufficient to avoid the simultaneity which causes the busy signal and makes it impossible to establish the connection. This phenomenon is even more sensitively perceived in mobile networks, where the greater probability of the line being interrupted, due indeed to mobility, and to the long times for establishing the call (about 5 seconds, with respect to the few milliseconds of advanced fixed networks), helps to determine a phenomenon which users perceive as very irritating or, at times, frustrating.

The issue described involves further drawbacks, such as the loss of time of users A and B in attempts to establish or restore the desired call and the increase in operator costs due to the waste of telephone network resources, with a consequent reduction in call profit margins.

A method for handling the situation described exists, illustrated in the patent document CN101754146. According to this method, the issue of the two simultaneous calls is solved by interrupting one of the two calls and completing the other one. This method solves the issue described without, however, giving users the perception that the issue has actually been solved and, furthermore, giving up the revenues that would derive from the completion of the interrupted call.

### BRIEF DESCRIPTION OF THE INVENTION

It is, therefore, an object of the present invention to solve the technical issue described (users attempting to call each other simultaneously without success), overcoming the drawbacks of the available solutions, including the method described in the patent document CN101754146, by introducing a new system for routing a telephone communication between two users A and B who are trying to call each other simultaneously.

The method according to the present invention is adapted to meet both the connection requests of users A and B, bringing them both to completion, thus overcoming the obstacles deriving from the simultaneity of the aforesaid requests. The invention introduced herein brings an economic advantage to the operator who adopts it, which may legitimately charge the cost of both calls. Furthermore, the method according to the present invention allows to insert a short notification message with which the operator informs the users of the presence of the service according to the present invention and of the fact that their call is about to be completed. This allows to avoid the drawback, present in the current joining systems of competing calls, according to which the two users, as both callers, are connected to each other without having heard the interlocutor answer with the usual "hello?". This leads to both users perceiving the silent voice issue and may give rise to misunderstandings and undermine the correct use of the system (one of the users or both may also hang up after waiting in vain for a signal from the other side). To avoid this drawback and the possible ending of the call due to one or both users not communicating with the respective interlocutor, before joining the two conversation streams, the designated telephone network node, for example, the telephone switch or a multipoint control unit, will, therefore, insert in the audio stream of both users an appropriate message adapted to notify them of the fact that their call has been correctly established. Furthermore, this message may allow the telephone network operator to gain further advantages, obtaining the double result of drawing attention to the care given to their network users and, in case one of the two users is part of the network of another operator, of also advertising with this user the quality of their services.

The invention, therefore, allows to obtain a fourfold advantage:
The first advantage is that it allows users to save time and stress by effectively solving the issue of simultaneous calls; the second is that it allows the operator to reduce costs by eliminating waste of network resources; the third is that it allows the operator to increase revenues, by virtue of the possibility of charging two calls instead of one; the fourth is that it allows the operator to obtain an image benefit with its customers and with those of the competition, transforming the issue of simultaneous calls into an advertising opportunity.

Further objects, features and advantages of the present invention will become more apparent from the following detailed description, given by way of explanation and not by way of limitation and illustrated in the accompanying Figures in which:

### BRIEF DESCRIPTION OF THE DRAWINGS

Figure 1 shows a schematic description of the case of a first example of a call between two users A and B on the Public Land Mobile Network (PLMN);
Figure 2 shows a schematic description of the case of a first example of two simultaneous calls between two users A and B on the Public Land Mobile Network (PLMN);
Figure 3 shows a schematic description of an example of a telephone communication network to which the method of the present invention applies, comprising a PLMN and a fixed telephone network;
Figure 4 shows a schematic description of the case of a second example of a telephone communication network to which the method of the present invention applies, comprising a PLMN and a fixed telephone network; and

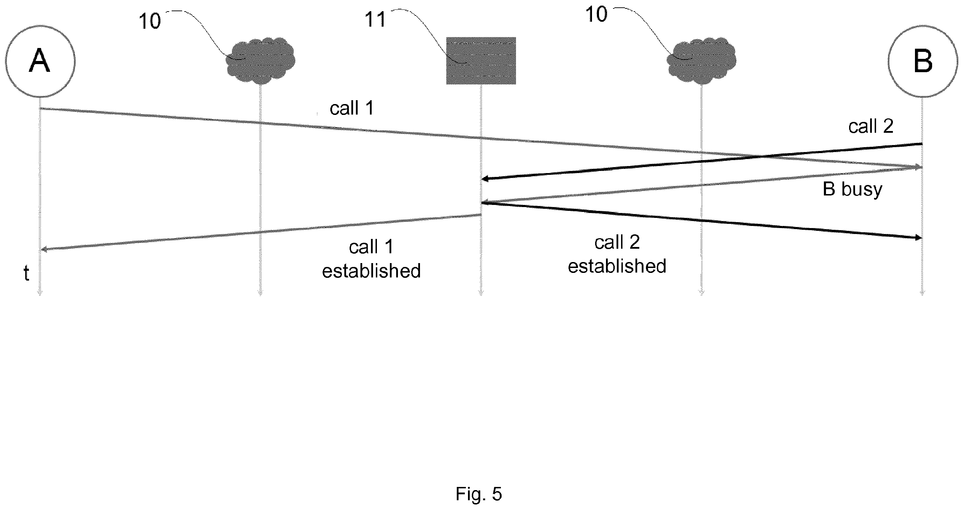

Figure 5 shows a schematic description of the case of two simultaneous calls between two users A and B on the Public Land Mobile Network (PLMN), handled by means of the method according to the present invention.

### DETAILED DESCRIPTION OF THE INVENTION

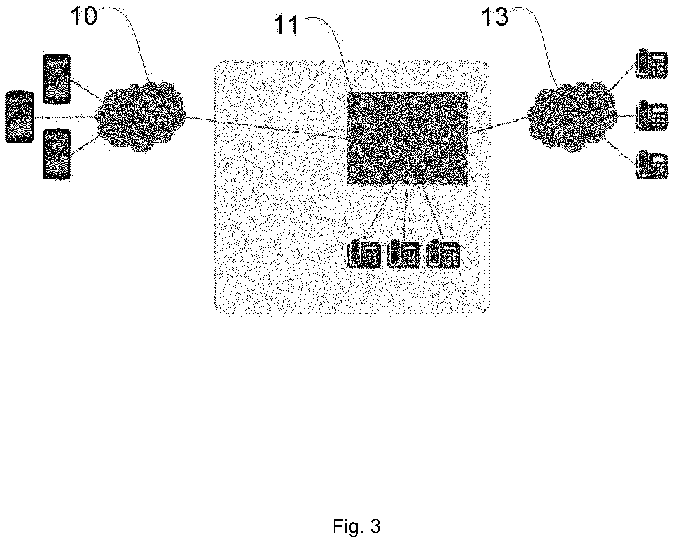

The present invention is applicable to any telephone switching system comprising fixed networks and mobile networks; however, since the technical problem faced is much more frequent in the mobile network, by way of explanation, the Figures shown refer to a telephone switching apparatus used by a mobile operator (Telephone Switch - referred to as TS 11 from now on). Such application scenario is shown in Figure 3, in which, by way of explanation and not by way of limitation, both users connected to mobile networks and users connected to fixed networks are shown.

With reference to the accompanying Figures, an example case is taken into consideration in which the TS 11 of an operator detects the following situation: a own user A of a fixed 13 or mobile network 10 is receiving a call from a user B - part of their own network or of that of any other telephone operator - which the user A is, in turn, simultaneously, attempting to establish a telephone conversation with.

The system and the method according to the present invention handle the situation described in an alternative manner with respect to that currently in use. In a preferred embodiment of the present invention, instead of generating the classic busy signal and sending it to the two users A and B or interrupting one of the two calls to then complete and route the other one, the telephone operator provides for directly establishing the telephone conversation between the two calling users.

In a further preferred embodiment, the operator may also make the telephone connection between users A and B be preceded by a suitable notice, consisting, for example, of a voice message, a jingle, a combination of sounds and messages, a push notification, an SMS, a vibration, a change in the telephone terminal screen of users A and B, etc.

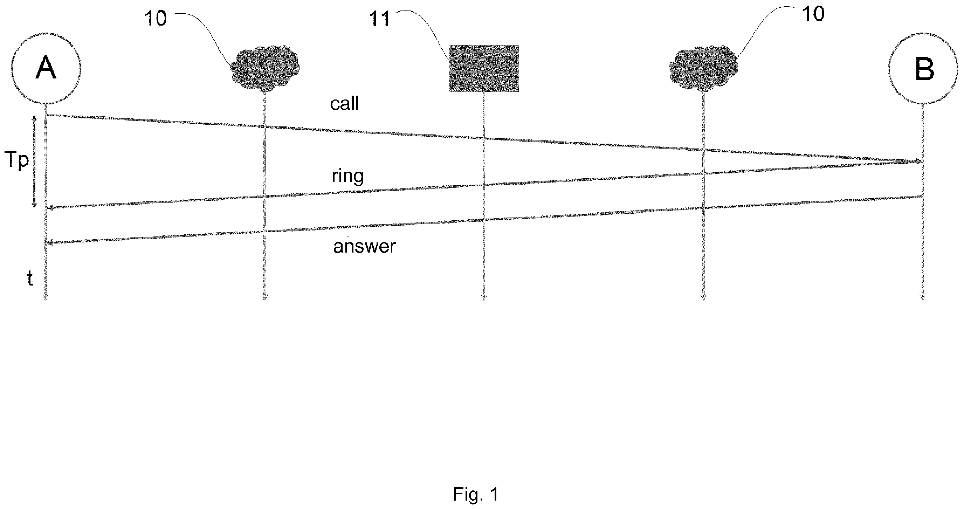

The accompanying Figure 1 describes the case of a successful standard call between two users A and B on the Public Land Mobile Network (PLMN) 10 from the point of view of the TS 11 of the mobile operator used as an example. User A makes a call to user B. After a certain time Tp (called paging time) the terminal of user B rings. If user B is available to accept the call, the call will be established when user B responds.

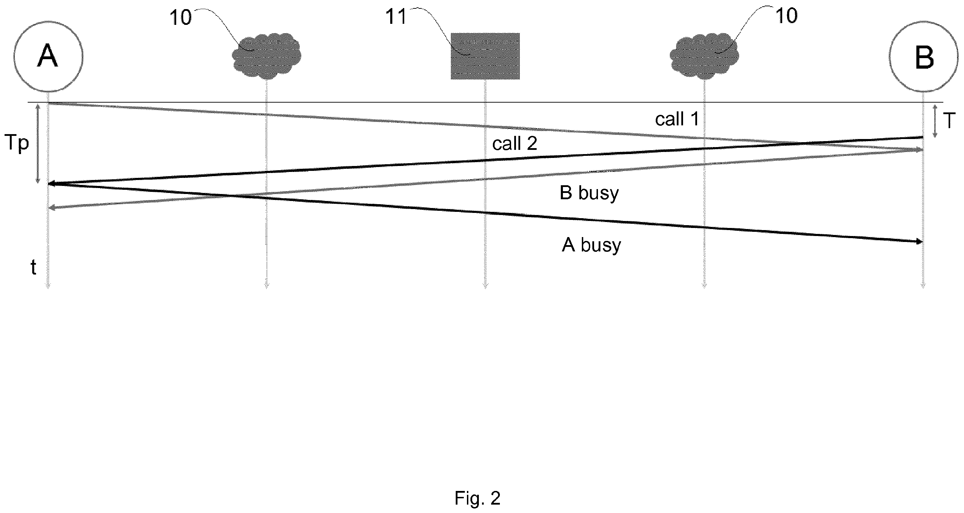

In the accompanying Figure 2, on the other hand, the technical issue to be solved is shown, i.e., the case of two simultaneous calls between two users A and B, also on the PLMN 10. This time the user A makes a call to the user B and, within a certain time interval T (sufficiently shorter than the paging time, Tp), the user B also attempts to call the user A who is trying to call him. In the systems currently in use, both the users A and B receive the busy signal from the telephone network and, therefore, the stall situation described above, which the present invention is capable of avoiding, is established. More specifically, when this call is handled according to the methods of the background art, the user A makes a call to the user B and, after a sufficiently short time T, the user B also makes a call to the user A. As a consequence, the TS 11 first receives the call of the user A to the user B, which is routed to the user B. Then, after the time T, the telephone switch TS 11 receives the call of the user B to the user A, which is routed to the user A. Since both the users A and B are trying to call each other, the telephone switch TS 11 will receive a "user A busy" signal, which said telephone switch TS 11 will forward to the user B, and a "user B busy" signal, which said TS 11 will forward to the user A.

The method according to the present invention may advantageously be applied to any switching node which is on the network path connecting users A and B. By way of non-limiting example, a preferred embodiment of the method in accordance with the invention, applied, as already anticipated above, to the node TS 11 of a mobile operator, is described below. In general, however, the method in accordance with the invention may be implemented in any telephone network node, mobile or fixed, enabled to handle calls and connections between telephone network users.

According to a preferred embodiment of the method according to the present invention, when the telephone switch TS 11 receives the call request from A to B, said telephone switch TS 11 inserts the state of this new call into suitable storing means. Said storing means may be consist, for example, of a suitable database (or of an equivalent element, for example, a map in the memory, or a table on a file, etc.) called Tracking Data Base or TDB 12.

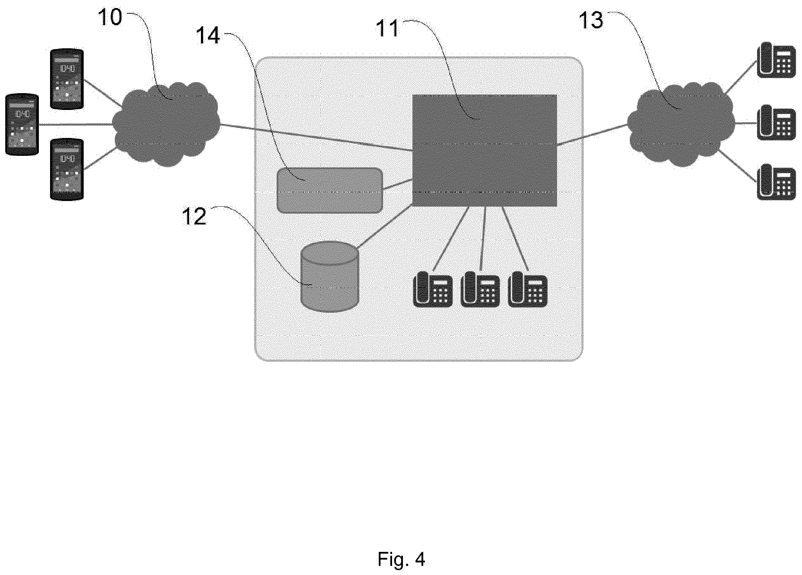

With reference to the accompanying Figure 4, in which, by way of non-limiting example, the example of a tracking data base TDB 12 is given, we have that the use of said data base TDB 12 causes the sequence of operations, performed by the system according to the present invention to handle the case of two simultaneous calls between two users A and B, to be as follows:
the user A makes a call to the user B and, after a sufficiently short time, the user B also makes a call to the user A; consequently, the call made by the user A to user B arrives at the telephone switch TS 11 first;
said telephone switch TS 11 checks in the data base TDB 12 if a tracking of the call attempt of the user B to the user A is already there;
if in the data base TDB 12 no trackings of calls or pending call attempts between the users B and A are there, then said telephone switch TS 11 forwards the call of the user A to the user B, inserting the tracking thereof into the data base TDB 12.

When, after a sufficiently short time interval, a call from the user B to the user A arrives at the telephone switch TS 11, said telephone switch TS 11, instead of forwarding the call directly to the user A, checks whether the tracking of a pending call from the user A to the user B is already present in the data base TDB 12.

The telephone switch TS 11 does find a tracking of the pending call from the user A to the user B and, consequently, instead of normally routing the call of B to A, said telephone switch will join the two ongoing call attempts, the one from the user A to the user B and the one from the user B to the user A.

The operation for joining the two pending calls may be performed, according to the present invention, in different manners.

A first case is the one in which the telephone switch TS 11 itself connects the audio streams to each other and acts as a "bridge".

Alternatively, a multipoint control unit MCU 14 may be employed, usually outside the telephone switch TS 11, which acts as a "star center" for communication between several terminals. A unit MCU 14 is generally characterized by the function thereof of receiving audio/video streams from multiple users and distributing such streams to all the other participants in the communication. In the particular case of an audio communication between N users, a unit MCU 14 is adapted to receive N audio streams from the N users and sends to each user the mixed audio of the other N-1 users. In the specific case of the present invention, a unit MCU 14 may also be employed to send a voice message to the users to inform them of the intervention of the service.

Since the user B is already attempting a call to A, the telephone switch TS 11 will still receive a "user B busy" signal, but the telephone switch TS 11 may ignore this message because the communication between the two users A and B has already been previously established.

## Claims

1. A method for a mobile or fixed telephone network node, enabled to handle calls and connections between telephone network users and associated with suitable call tracking and pending calls attempts storing means, said method being adapted to establish a telephone conversation between two users simultaneously calling one another, comprising:
a) receiving a call request from a first user (A) towards a second user (B);
b) checking the presence of the tracking of a previous call from the second user (B) to the first user (A) in said call tracking storing means;
c) in case the outcome of step b) is negative, the storing of the call request from the first user (A) towards the second user (B) in said storing means;
d) routing the call from the first user (A) towards the second user (B);
e) in case the outcome of step b) is positive, joining the two simultaneous ongoing call requests, the request from the first user (A) towards the second user (B) and the request from the second user (B) to the first user (A), **characterized in that** step e) is preceded by the sending, by means of the telephone network node, to the first user (A) and to the second user (B), of a notice informing that the simultaneous calls from the first user (A) towards the second user (B) and the request from the second user (B) to the first user (A) are to be connected.

2. The method according to claim 1, **characterized in that** said notice is selected from the group comprising: a voice message, a music jingle, a combination of sounds and messages, a push notification, an SMS message, a vibration and/or a change in the telephone terminal screen of the first user (A) and of the second user (B).

3. The method according to one or more of claims 1 to 2, **characterized in that** said telephone network node comprises a telephone switching apparatus, TS (11).

4. The method according to claim 3, **characterized in that** step e) is performed by the telephone switching apparatus, TS (11), by connecting the audio streams of the calls from the first user (A) towards the second user (B) and the request from the second user (B) to the first user (A).

5. The method according to one or more of claims 1 to 3, **characterized in that** said telephone network node comprises a multipoint control unit, MCU (14).

6. The method according to claim 5, **characterized in that** step e) is performed by the multipoint control unit, MCU (14), which provides for sending the audio from the second user (B) to the first user (A) and for sending the audio from the first user (A) to the second user (B).

7. The method according to one or more of claims 1 to 6, **characterized in that** said call tracking and pending calls attempts storing means comprise a tracking data base, TDB (12).

8. A mobile or fixed telephone network node, adapted to handle calls and connections between telephone network users and associated with suitable call tracking and pending calls attempts storing means, comprising:
means for receiving a call request from a first user (A) towards a second user (B);
means for checking the presence of the tracking of a previous call from the second user (B) to the first user (A) in said call tracking storing means;
means for storing the call request received from the first user (A) towards the second user (B) in said storing means;
means for routing the call from the first user (A) towards the second user (B);
means for joining of the two simultaneous ongoing call requests, the request from the first user (A) towards the second user (B) and the request from the second user (B) to the first user (A), **characterized in that** it comprises means for sending, to the first user (A) and to the second user (B), of a notice informing that the simultaneous calls from the first user (A) towards the second user (B) and the request from the second user (B) to the first user (A) are to be connected.

9. The telephone network node according to claim 8, **characterized in that** said notice is selected from the group comprising: a voice message, a music jingle, a combination of sounds and messages, a push notification, an SMS message, a vibration and/or a change in the telephone terminal screen of the first user (A) and of the second user (B).

10. The telephone network node according to one or more of claims 8 to 9, **characterized in that** it comprises a telephone switching apparatus, TS (11), adapted to connect the audio streams of the calls from the first user (A) towards the second user (B) and the request from the second user (B) to the first user (A).

11. The telephone network node according to one or more of claims 8 to 10, **characterized in that** said telephone network node comprises a multipoint control unit, MCU (14), adapted to send the audio from the second user (B) to the first user (A) and to send the audio from the first user (A) to the second user (B).

12. The telephone network node according to one or more of claims 8 to 11, **characterized in that** said call tracking and pending calls attempts storing means comprise a tracking data base, TDB (12).
